(19) Europäisches Patentamt
European Patent Office
Office européen des brevets

(11) **EP 2 910 585 B1**

(12) **EUROPÄISCHE PATENTSCHRIFT**

(45) Veröffentlichungstag und Bekanntmachung des Hinweises auf die Patenterteilung:
**04.07.2018 Patentblatt 2018/27**

(21) Anmeldenummer: **14156098.7**

(22) Anmeldetag: **21.02.2014**

(51) Int Cl.:
*C08G 18/66* (2006.01)     *C08G 18/76* (2006.01)
*C08G 64/30* (2006.01)     *C08G 18/10* (2006.01)
*C08G 18/16* (2006.01)     *C08G 18/18* (2006.01)
*C08G 18/32* (2006.01)     *C08G 18/42* (2006.01)
*C08G 18/44* (2006.01)

(54) **Schotterkörper sowie Verfahren zur Herstellung von Schotterkörpern**

Ballast layer and method for production of ballast layers

Corps de ballast et procédé de fabrication de corps de ballast

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**26.08.2015 Patentblatt 2015/35**

(73) Patentinhaber: **Covestro Deutschland AG**
**51373 Leverkusen (DE)**

(72) Erfinder:
• **Gross, Thomas**
**42929 Wermelskirchen (DE)**
• **Erwe, Torsten**
**51519 Odenthal (DE)**
• **Kleiner, Thomas**
**51519 Odenthal (DE)**

(74) Vertreter: **Patentanwälte Bressel und Partner mbB**
**Potsdamer Platz 10**
**10785 Berlin (DE)**

(56) Entgegenhaltungen:
EP-A1- 2 530 101          WO-A1-2012/080406
US-A1- 2007 172 590

• **Ausfelder ET AL: "Verwertung und Speicherung von CO2", , 31. Oktober 2008 (2008-10-31), Seiten 1-35, XP055042702, Gefunden im Internet: URL:http://www.dechema.de/dechema_media/diskussionco2.pdf [gefunden am 2012-10-30]**

**Beschreibung**

Die vorliegende Erfindung betrifft Schotterkörper sowie ein Verfahren zur Herstellung von Schotterkörpern, die eine hohe Stabilität und lange Nutzungsdauer aufweisen, für den Gleis- und Straßenbau und dem Deichbau aus Schottersteinen und Polyurethanschaumstoffen auf Basis eines Reaktionsgemisches aus ausgewählten Polyisocyanaten und ausgewählten Verbindungen mit gegenüber Isocyanatgruppen reaktionsfähigen Gruppen.

In den letzten Jahren hat die Beanspruchung von Schotterkörpern, welche im Gleis- und Straßenbau eingesetzt werden, stark zugenommen. Eine Ursache hierfür ist sicherlich die allgemeine Zunahme der Mobilität in der Bevölkerung und des Verkehrs von Gütern. Insbesondere im Schienenverkehr fahren immer häufiger Züge mit hoher Geschwindigkeit und Achsenlast. Die hierdurch bedingten enormen Verschiebungskräfte werden über die Schienen auf die Schwellen und von dort auf den Schotterkörper übertragen. Im Laufe der Zeit verändert sich das Steingebilde und einzelne Schottersteine werden verdreht, verlagert und abgerundet, so dass die Lage der Gleise verändert wird und in regelmäßigen Abständen kosten- und zeitintensive Reparaturarbeiten durchgeführt werden müssen.

In der Vergangenheit wurden bereits verschiedene Verfahren zur Befestigung von Schotterkörpern unter Einbeziehung von Kunststoffen beschrieben (DD86201, DE-A 2063727, DE-A 2305536, DE-A 3941142, DE-A 19711437, DE-A 19651755, DE-A 3821963, DE-A 19811838, JP-A 08157552).

DE-A 2063727 beschreibt ein Verfahren zur Reduktion von Gleisverwerfungen durch Querverschiebungskräfte. Hierbei wird das Bindemittel in Form eines hochviskosen Kunststoffes auf das Schotterbett gesprüht und die Schottersteine an den Berührungsstellen verklebt. Alternativ kann eine flächige Verklebung der Schottersteine durch Injektion des Bindemittels in Form eines 2-Komponenten-Kunstharzes realisiert werden.

In DE-A 2305536 wird ein Verfahren zum Heben von Gleisschwellen und Straßenbelägen durch Einbringen eines Quellkörpers beschrieben, welcher sich nach dem Einbringen verfestigt. Es handelt sich beispielsweise um einen Mehrkomponenten-Kunststoff, z.B. Polyurethanschaum. Die Applikation des flüssigen Kunststoffes erfolgt mittels einer Füllsonde durch ein Loch in der Gleisschwelle.

JP-A 8157552 beschreibt die Herstellung von Polyurethan-Harzen, welche in Gegenwart von Feuchtigkeit aushärten und zur Stabilisierung von Steinanhäufungen eingesetzt werden. Die Polyurethan-Harze werden unter Verwendung von aromatischen Polyisocyanaten, monofunktionellen Polyethern und Amino - gestarteten Polyethern hergestellt und mittels Sprühverfahren appliziert.

WO 2012/080406 A1 betrifft ein Polyurethan-Eisenbahngleisbett, dessen Herstellung und eine Eisenbahnanlage, welche ein Polyurethan-Eisenbahngleisbett aufweist. Das Eisenbahngleisbett umfasst ein Eisenbahnplanum und eine Polyurethan-Formschicht, wobei die Polyurethan-Formschicht auf dem Eisenbahnplanum angeordnet ist. Es wird ausgeführt, dass durch Auftragen der Polyurethan-Formschicht auf dem Eisenbahngleisbett besondere Anforderungen hinsichtlich der Umwelt beim Vergießen des Polyurethans an Ort und Stelle vermieden werden können. Eine Polyurethan-Formschicht mit verschiedenen Dichten und/oder Härten kann hergestellt und dann gemäß den praktischen Anforderungen verschiedener Gleisbetten verlegt werden.

US 2007/172590 A1 beschreibt Ballast und ein Verfahren zur Herstellung von Ballast, welcher eine hohe Stabilität und lange Nutzungsdauer aufweist. Dieser Ballast eignet sich für die Eisenbahngleisbettverlegung, den Straßenbau und für Deichsysteme, wie sie beispielsweise im Küstenschutz eingesetzt werden. Der Ballast umfasst Ballaststeine und Polyurethanschaumstoffe auf Basis eines Reaktionsgemisches aus ausgewählten Polyisocyanaten und ausgewählten Verbindungen mit gegenüber Isocyanatgruppen reaktionsfähigen Gruppen.

EP 1 979 542 A1 offenbart Schotterkörper und ein Verfahren zur Herstellung von Schotterkörpern im Gleis- und Straßenbau und Deichbau, die eine hohe Stabilität und lange Nutzungsdauer aufweisen, aus Schottersteinen und Polyurethanschaumstoffen auf Basis eines Reaktionsgemisches aus ausgewählten Polyisocyanaten und ausgewählten Verbindungen mit gegenüber Isocyanatgruppen reaktionsfähigen Gruppen. Zwischen die aufgeschütteten Schottersteine wird ein Reaktionsgemisch zur Herstellung eines Polyurethanschaumstoffes appliziert, wobei das Reaktionsgemisch erhältlich ist aus

a) einer oder mehreren Isocyanatverbindungen aus der Gruppe bestehend aus Polyisocyanaten mit einem NCO-Gehalt von 28 bis 50 Gew.-% und NCO-Prepolymeren mit einem NCO-Gehalt von 10 bis 48 Gew.-% aus Polyisocyanaten mit einem NCO-Gehalt von 28 bis 50 Gew. % und Polyetherpolyolen mit einer Hydroxylzahl von 6 bis 112, Polyoxyalkylendiolen mit einer Hydroxylzahl von 113 bis 1100 oder Alkylendiolen mit einer Hydroxylzahl von 645 bis 1850 oder Gemischen daraus und

b) einer Polyolkomponente bestehend aus einem oder mehreren Polyetherpolyolen mit einer Hydroxylzahl von 6 bis 112 und einer Funktionalität von 1,8 bis 8.

Im Markt wird ein zunehmender Bedarf an Rohstoffen und Produkten deutlich, welche eine verbesserte $CO_2$-Bilanz aufweisen. Die vorliegende Erfindung hat sich daher die Aufgabe gestellt, ein in EP 1 979 542 A1 beschriebenes Verfahren derart zu modifizieren, dass unter Beibehaltung der mechanischen Eigenschaften die $CO_2$-Bilanz insgesamt verbessert wird.

Die Aufgabe wird erfindungsgemäß gelöst durch ein Verfahren zur Herstellung von Schotterkörpern, wobei

1) Schottersteine zu einem Schotterkörper aufgeschüttet werden und

2) zwischen die aufgeschütteten Schottersteine ein Reaktionsgemisch zur Herstellung eines Polyurethanschaumstoffes appliziert wird, wobei das Reaktionsgemisch erhältlich ist aus

a) eine oder mehrere Isocyanatverbindungen

b) eine Polyolkomponente umfassend ein oder mehrere Polyethercarbonatpolyole

c) 0 bis 26 Gew.-%, bezogen auf die Reaktionskomponenten b) bis g), eines oder mehrerer Kettenverlängerungsmittel mit einer Hydroxyl- oder Aminzahl von 245 bis 1850 und einer Funktionalität von 1,8 bis 8,

d) 0,05 bis 5 Gew.-%, bezogen auf die Reaktionskomponenten b) bis g), eines oder mehrerer Treibmittel,

e) 0 bis 5 Gew.-%, bezogen auf die Reaktionskomponenten b) bis g), eines oder mehrerer Katalysatoren,

f) 0 bis 50 Gew.-%, bezogen auf die Reaktionskomponenten b) bis g), eines oder mehrerer Füllstoffe und

g) 0 bis 25 Gew.-%, bezogen auf die Reaktionskomponenten b) bis g), eines oder mehrerer Hilfs- und/oder Zusatzstoffe,

wobei die Kennzahl des Reaktionsgemisches im Bereich von 70 und 130 liegt.

Ein weiterer Gegenstand der vorliegenden Erfindung ist ein Schotterkörper, umfassend Schottersteine und zwischen den Schottersteinen befindlichen Polyurethan-Schaumstoff, wobei der Polyurethanschaumstoff erhältlich ist aus einem Reaktionsgemisch umfassend:

a) eine oder mehrere Isocyanatverbindungen

b) eine Polyolkomponente umfassend ein oder mehrere Polyethercarbonatpolyole

c) 0 bis 26 Gew.-%, bezogen auf die Reaktionskomponenten b) bis g), eines oder mehrerer Kettenverlängerungsmittel mit einer Hydroxyl- oder Aminzahl von 245 bis 1850 und einer Funktionalität von 1,8 bis 8,

d) 0,05 bis 5 Gew.-%, bezogen auf die Reaktionskomponenten b) bis g), eines oder mehrerer Treibmittel,

e) 0 bis 5 Gew.-%, bezogen auf die Reaktionskomponenten b) bis g), eines oder mehrerer Katalysatoren,

f) 0 bis 50 Gew.-%, bezogen auf die Reaktionskomponenten b) bis g), eines oder mehrerer Füllstoffe und

g) 0 bis 25 Gew.-%, bezogen auf die Reaktionskomponenten b) bis g), eines oder mehrerer Hilfs- und/oder Zusatzstoffe,

wobei die Kennzahl des Reaktionsgemisches im Bereich von 70 und 130 liegt.

Schließlich betrifft die Erfindung ebenfalls die Verwendung der erfindungsgemäßen Schotterkörper für den Gleisbau, Straßenbau und/oder Deichbau.

Die Polyurethanpolymere auf der Basis von Polyethercarbonatpolyolen verbessern die $CO_2$-Bilanz, da $CO_2$ in die Polymerkette eingebaut wird. Überraschenderweise wurde festgestellt, dass die für die Anwendung benötigten Eigenschaften zu herkömmlichen Systemen vergleichbar sind.

Die nachfolgenden Erläuterungen, Definitionen und Ausführungsformen gelten selbstverständlich sowohl für das erfindungsgemäße Verfahren, die erfindungsgemäßen Schotterkörper und die erfindungsgemäße Verwendung.

Im erfindungsgemäßen Verfahren werden vorzugsweise die Schotterkörper im Gleisbau, Straßenbau und/oder Deichbau eingesetzt.

Hinsichtlich des erfindungsgemäßen Schotterkörpers kann der Polyurethanschaumstoff eine Freischaumdichte von 20 bis 800 kg/m³ (gemessen gemäß DIN EN ISO 845) und eine Zugfestigkeit von mindestens 0,1 MPa (gemessen gemäß DIN EN ISO 1798) aufweisen.

Unter Kennzahl wird das Äquivalentverhältnis von NCO-Gruppen zu OH-Gruppen und NH-Gruppen multipliziert mit 100 verstanden. So bedeutet z.B. eine Kennzahl von 110, dass auf eine reaktive OH-Gruppe oder NH-Gruppe 1,1 reaktive NCO-Gruppen aus den Isocyanatverbindungen oder auf eine reaktive NCO-Gruppe aus den Isocyanatverbindungen 0,91 reaktive OH-Gruppen bzw. NH-Gruppen vorliegen.

Die Komponenten zur Herstellung der Polyurethanschaumstoffe werden in einem Mischungsverhältnis eingesetzt, welches eine homogene Vermischung der Komponenten, insbesondere beim Einsatz von Hochdruckmaschinen, erlaubt. Durch die Verwendung von Hochdruckmaschinen lassen sich auch schnell reagierende PUR - Systeme verarbeiten und somit ein wirtschaftliches Verfahren realisieren. Durch Einsatz der im nachfolgenden näher beschriebenen Rohstoffe lassen sich zudem die Verarbeitungseigenschaften des PUR-Systems entsprechend den Anforderungen optimal einstellen. So ist eine Teilverschäumung des Schotterkörpers unter Anwendung der Gießtechnik als Applikationsmethode realisierbar. Darüber hinaus lassen sich die mechanischen Eigenschaften der eingesetzten Polyurethanschäume in weiten Grenzen variieren.

Die Polyurethanschäume werden vorzugsweise in Gegenwart von Kettenverlängerern und Katalysatoren hergestellt. Hierbei werden bevorzugt Katalysatoren verwendet, welche primäre und /oder sekundäre Hydroxyl- und/oder Aminogruppen besitzen. Die auf diese Weise erhaltenen Polyurethane weisen ein verbessertes Emissionsverhalten auf und zeichnen sich, nach Extraktion mit Lösungsmitteln (zum Beispiel Wasser), durch einen verringerten Anteil an mobilisierbaren Inhaltstoffen aus. Die erfindungsgemäßen Polyurethanschäume können gegebenenfalls zusätzlich aus der Polyurethanchemie an sich bekannte Füllstoffe sowie Hilfs- und Zusatzstoffe enthalten.

Das Reaktionsgemisch zur Herstellung des Polyurethanschaums wird im Hinblick auf die Verarbeitung so eingestellt, dass es unter Verwendung einer einfachen Applikationstechnik (zum Beispiel Gießverfahren) verwendet werden kann. Beispielsweise kann durch gezielte Einstellung der Reaktivität des Reaktionsgemisches eine Teilverschäumung der Schotterkörper durchgeführt werden. Eine solche Teilverschäumung erlaubt einerseits die selektive Verstärkung in besonders belasteten Teilbereichen des Schotterkörpers (zum Beispiel Kurven, Lastenabtragungsbereiche) und ermöglicht andererseits den ungestörten Abfluss von Flüssigkeiten, wie zum Beispiel Wasser. Eine zu langsame Reaktion würde dazu führen, dass das Reaktionsgemisch in den Boden oder in seitliche Bereiche des Schotterbettes abfließt. Eine zu schnelle Reaktion würde dazu führen, dass das Reaktionsgemisch nicht bis in eine ausreichende Schichttiefe des Schüttgutes eindringt. Zum Beispiel sollte für ein Gleissystem mit ca. 40 cm Schotterhöhe die Startzeit des Reaktionsgemisches 1 bis 15 Sekunden, vorzugsweise 1 bis 5 Sekunden, und die Verfestigungszeit (Abbindezeit) 15 bis 45 Sekunden, vorzugsweise 15 bis 30 Sekunden, betragen, wobei längere Verfestigungszeiten möglich aber unwirtschaftlich wären.

Der eingesetzte Polyurethanschaum sollte vorzugsweise eine Stauchkraft (bei 10% Stauchung) von mindestens 10,0 N, eine Stauchhärte (bei 10% Stauchung) von mindestens 1,0 kPa und eine Zugfestigkeit von mindestens 0,1 MPa aufweisen. Darüber hinaus sollte er bevorzugt einen Druckverformungsrest (DVR) (40 %, 25°C, 5 min) von höchstens 0,01 % und eine gute Witterungs- bzw. Hydrolysestabilität aufweisen. Der eingesetzte Polyurethanschaum sollte sich weiterhin durch einen möglichst geringen Anteil an emittierbaren sowie mobilisierbaren Inhaltstoffen auszeichnen.

Bei den verwendeten Polyisocyanaten a) handelt es sich um (cyclo)aliphatische oder aromatische Polyisocyanate. Sie können beispielsweise ausgewählt sein aus der Gruppe:

Polyisocyanate mit einem NCO-Gehalt von 28 bis 50 Gew.-% und
NCO-Prepolymere mit einem NCO-Gehalt von 10 bis 48 Gew.-% aus Polyisocyanaten mit einem NCO-Gehalt von 28 bis 50 Gew.-% und
Polyetherpolyolen mit einer Hydroxylzahl von 6 bis 112, Polyoxyalkylendiolen mit einer Hydroxylzahl von 113 bis 1100 oder Alkylendiolen mit einer Hydroxylzahl von 645 bis 1850 mg KOH/g

oder Gemischen daraus.

Bevorzugt handelt es sich um Toluylendiisocyanat, Di- und/oder Polyisocyanate der Diphenylmethanreihe, welche einen NCO-Gehalt von 28 bis 50 Gew.-% aufweisen. Hierzu gehören bei Raumtemperatur flüssige und gegebenenfalls entsprechend modifizierte Gemische von 4,4'-Diisocyanatodiphenylmethan mit 2,4'- und in geringem Umfang gegebenenfalls 2,2'-Diisocyanatodiphenylmethan. Gut geeignet sind auch bei Raumtemperatur flüssige Polyisocyanatgemische der Diphenylmethanreihe, die neben den genannten Isomeren deren höhere Homologe enthalten, und die in an sich bekannter Weise durch Phosgenierung von Anilin/Formaldehyd-Kondensaten zugänglich sind. Auch Urethanbzw. Carbodiimidgruppen und/oder Allophanat- bzw. Biuretgruppen aufweisende Modifizierungsprodukte dieser Di- und Polyisocyanate sind geeignet.

Ebenfalls bevorzugt sind die NCO-Prepolymere als Komponente a) mit einem NCO-Gehalt von 10 bis 48 Gew.-%, welche aus den vorgenannten Polyisocyanaten und Polyetherpolyolen mit einer Hydroxylzahl von 6 bis 112, Polyoxyalkylendiolen mit einer Hydroxylzahl von 113 bis 1100 oder Alkylendiolen mit einer Hydroxylzahl von 645 bis 1850 oder Gemischen daraus hergestellt werden.

Die Komponente b) umfasst erfindungsgemäß wenigstens ein Polyethercarbonatpolyol, welches durch Anlagerung von Kohlendioxid und Alkylenoxiden an H-funktionelle Startsubstanzen erhältlich ist. Unter "H-funktionell" wird im Sinne der Erfindung eine Starterverbindung verstanden, die gegenüber Alkoxylierung aktive H-Atome aufweist.

In einer bevorzugten Ausführungsform der Erfindung weist das Polyethercarbonatpolyol einen Gehalt an Carbonatgruppen, berechnet als $CO_2$, von $\geq$ 3 und $\leq$ 35 Gew.-%, bevorzugt von $\geq$ 5 und $\leq$ 30 Gew.-% und besonders bevorzugt von $\geq$ 10 und $\leq$ 28 Gew.-% auf. Die Bestimmung erfolgt mittels NMR gemäß der im Methodenteil genannten Analysenmethode.

In einer weiteren bevorzugten Ausführungsform der Erfindung weist das Polyethercarbonatpolyol ein zahlenmittleres Molekulargewicht $M_n$ von $\geq$ 500 und $\leq$ 10000 g/mol, bevorzugt $\geq$ 500 und $\leq$ 7500 g/mol, besonders bevorzugt $\geq$ 750 und $\leq$ 6000 g/mol und ganz besonders bevorzugt $\geq$ 1000 und $\leq$ 5000 g/mol auf.

Vorzugsweise hat das Polyethercarbonatpolyol eine mittlere OH-Funktionalität von $\geq$ 1 und $\leq$ 6, insbesondere von $\geq$ 1 und $\leq$ 4, besonders bevorzugt $\geq$ 2 und $\leq$ 3.

Allgemein können zur Herstellung der Polyethercarbonatpolyole Alkylenoxide (Epoxide) mit 2 bis 24 Kohlenstoffatomen eingesetzt werden. Bei den Alkylenoxiden mit 2 bis 24 Kohlenstoffatomen handelt es sich beispielsweise um eine oder mehrere Verbindungen ausgewählt aus der Gruppe bestehend aus Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Butadienmonoxid, Isoprenmonoxid, Cyclopentenoxid, Cyclohexenoxid, Cycloheptenoxid, Cyclooctenoxid, Styroloxid, Methylstyroloxid, Pinenoxid, ein- oder mehrfach epoxidierte Fette als Mono-, Di- und Triglyceride, epoxidierte Fettsäuren, $C_1$-$C_{24}$-Ester von epoxidierten Fettsäuren, Epichlorhydrin, Glycidol, und Derivate des Glycidols, wie beispielsweise Methylglycidylether, Ethylglycidylether, 2-Ethylhexylglycidylether, Allylglycidylether, Glycidylmethacrylat sowie epoxidfunktionelle Alkyoxysilane, wie beispielsweise 3-Glycidyloxypropyltrimethoxysilan, 3-Glycidyioxypropyltriethoxysilan, 3-Glycidyloxypropyltripropoxysilan, 3-Glycidyloxypropyl-methyl-dimethoxysilan, 3-Glycidyloxypropylethyldiethoxysilan, 3-Glycidyloxypropyltrlisopropoxysilan. Vorzugsweise werden als Alkylenoxide Ethylenoxid und/oder Propylenoxid, insbesondere Propylenoxid eingesetzt.

In einer besonders bevorzugten Ausführungsform der Erfindung liegt der Anteil an Ethylenoxid an der gesamt eingesetzten Menge an Propylenoxid und Ethylenoxid $\geq$ 0 und $\leq$ 90 Gew.-%, bevorzugt $\geq$ 0 und $\leq$ 50 Gew.-% und besonders bevorzugt $\geq$ 0 und $\leq$ 25 Gew.-%.

Als geeignete H-funktionelle Startsubstanz können Verbindungen mit für die Alkoxylierung aktiven H-Atomen eingesetzt werden. Für die Alkoxylierung aktive Gruppen mit aktiven H-Atomen sind beispielsweise -OH, -$NH_2$ (primäre Amine), -NH- (sekundäre Amine), -SH und - $CO_2$H, bevorzugt sind -OH und -$NH_2$, besonders bevorzugt ist -OH. Als H-funktionelle Startersubstanz wird beispielsweise eine oder mehrere Verbindungen ausgewählt aus der Gruppe bestehend aus mehrwertige Alkohole, mehrwertige Amine, mehrwertige Thiole, Aminoalkohole, Thioalkohole, Hydroxyester, Polyetherpolyole, Polyesterpolyole, Polyesteretherpolyole, Polyethercarbonatpolyole, Polycarbonatpolyole, Polycarbonate, Polyethylenimine, Polyetheramine (z. B. sogenannte Jeffamine® von Huntsman), Polytetrahydrofurane (z. B. PolyTHF® der BASF, wie z. B. PolyTHF® 250, 650S, 1000, 1000S, 1400, 1800, 2000), Polytetrahydrofuranamine (BASF Produkt Polytetrahydrofuranamin 1700), Polyetherthiole, Polyacrylatpolyole, Ricinusöl, das Mono- oder Diglycerid von Ricinolsäure, Monoglyceride von Fettsäuren, chemisch modifizierte Mono-, Di- und/oder Triglyceride von Fettsäuren, und $C_1$-$C_{24}$ Alkyl-Fettsäureester, die im Mittel mindestens zwei OH-Gruppen pro Molekül enthalten, eingesetzt. Beispielhaft handelt es sich bei den $C_1$-$C_{24}$ Alkyl-Fettsäureester, die im Mittel mindestens zwei OH-Gruppen pro Molekül enthalten, um Handelsprodukte wie Lupranol Balance® (Fa. BASF AG), Merginol®-Typen (Fa. Hobum Oleochemicals GmbH), Sovermol®-Typen (Fa. Cognis Deutschland GmbH & Co. KG) und Soyol®TM-Typen (Fa. USSC Co.).

Als H-funktionelle Startersubstanzen geeignete mehrwertige Alkohole sind beispielsweise zweiwertige Alkohole, wie z.B. Ethylenglykol, Diethylenglykol, Propylenglykol, Dipropylenglykol, 1,3-Propandiol, 1,4-Butandiol, 1,4-Butendiol, 1,4-Butindiol, Neopentylglykol, 1,5-Pentantandiol, Methylpentandiole (wie z.B. 3-Methyl-1,5-pentandiol), 1,6-Hexandiol; 1,8-Octandiol, 1,10-Decandiol, 1,12-Dodecandiol, Bis-(hydroxymethyl)-cyclohexane (wie z.B. 1,4-Bis-(hydroxymethyl)cyclohexan), Triethylenglykol, Tetraethylenglykol, Polyethylenglykol, Dipropylenglykol, Tripropylenglykol, Polypropylenglykol, Dibutylenglykol und Polybutylenglykole, sowie alle Modifizierungsprodukte dieser zuvorgenannten Alkohole mit unterschiedlichen Mengen an $\varepsilon$-Caprolacton. In Mischungen von H-funktionellen Startern können auch dreiwertige Alkohole, wie beispielsweise Trimethylolpropan, Glycerin, Trishydroxyethylisocyanurat und Rizinusöl eingesetzt werden.

Die H-funktionellen Startersubstanzen können auch aus der Substanzklasse der Polyetherpolyole ausgewählt sein, insbesondere solchen mit einem zahlenmittleren Molekulargewicht $M_n$ im Bereich von 200 bis 4000 g/mol, vorzugsweise 250 bis 2000 g/mol. Bevorzugt sind Polyetherpolyole, die aus sich wiederholenden Ethylenoxid- und Propylenoxideinheiten aufgebaut sind, bevorzugt mit einem Anteil von 35 bis 100% Propylenoxideinheiten, besonders bevorzugt mit einem Anteil von 50 bis 100% Propylenoxideinheiten. Hierbei kann es sich um statistische Copolymere, Gradienten-Copolymere, alternierende oder Blockcopolymere aus Ethylenoxid und Propylenoxid handeln. Geeignete Polyetherpolyole, aufgebaut aus sich wiederholenden Propylenoxid- und/oder Ethylenoxideinheiten sind beispielsweise die Desmophen®-, Acclaim®-, Arcol®-, Baycoll®-, Bayfill®-, Bayflex®- Baygal®-, PET®- und Polyether-Polyole der Bayer MaterialScience AG (wie z. B. Desmophen® 3600Z, Desmophen® 1900U, Acclaim® Polyol 2200, Acclaim® Polyol 4000I, Arcol® Polyol 1004, Arcol® Polyol 1010, Arcol® Polyol 1030, Arcol® Polyol 1070, Baycoll® BD 1110, Bayfill® VPPU 0789, Baygal® K55, PET® 1004, Polyether® S180). Weitere geeignete homo-Polyethylenoxide sind beispielsweise die Pluriol® E-Marken der BASF SE, geeignete homo-Polypropylenoxide sind beispielsweise die Pluriol® P-Marken der BASF SE, geeignete gemischte Copolymere aus Ethylenoxid und Propylenoxid sind beispielsweise die Pluronic® PE oder Pluriol® RPE-Marken der BASF SE.

Die H-funktionelle Startersubstanzen können auch aus der Substanzklasse der Polyesterpolyole ausgewählt sein, insbesondere solchen mit einem zahlenmittleren Molekulargewicht $M_n$ im Bereich von 200 bis 4500 g/mol, vorzugsweise 400 bis 2500 g/mol. Als Polyesterpolyole werden mindestens difunktionelle Polyester eingesetzt. Bevorzugt bestehen Polyesterpolyole aus alternierenden Säure- und Alkoholeinheiten. Als Säurekomponenten werden z. B. Bernsteinsäure, Maleinsäure, Maleinsäureanhydrid, Adipinsäure, Phthalsäureanhydrid, Phthalsäure, Isophthalsäure, Terephthalsäure, Tetrahydrophthalsäure, Tetrahydrophthalsäureanhydrid, Hexahydrophthalsäureanhydrid oder Gemische aus den genannten Säuren und/oder Anhydride eingesetzt. Als Alkoholkomponenten werden z. B. 1,2-Ethandiol, 1,2-Propandiol, 1,3-Propandiol, 1,4-Butandiol, 1,5-Pentandiol, Neopentylglykol, 1,6-Hexandiol, 1,4-Bis-(hydroxymethyl)-cyclohexan, Diethylenglykol, Dipropylenglykol, Trimethylolpropan, Glycerin oder Gemische aus den genannten Alkoholen verwendet. Werden als Alkoholkomponente zweiwertige oder mehrwertige Polyetherpolyole eingesetzt, so erhält man Polyesteretherpolyole die ebenfalls als Startersubstanzen zur Herstellung der Polyethercarbonatpolyole dienen können. Falls Polyetherpolyole zur Herstellung der Polyesteretherpolyole eingesetzt werden, sind Polyetherpolyole mit einem zahlenmittleren Molekulargewicht $M_n$ von 150 bis 2000 g/mol bevorzugt.

Des Weiteren können als H-funktionelle Startersubstanzen Polycarbonatpolyole, wie beispielsweise Polycarbonatdiole, eingesetzt werden, insbesondere solchen mit einem zahlenmittleren Molekulargewicht $M_n$ im Bereich von 150 bis 4500 g/mol, vorzugsweise 500 bis 2500, die beispielsweise durch Umsetzung von Phosgen, Dimethylcarbonat, Diethylcarbonat oder Diphenylcarbonat und di- und/oder polyfunktionellen Alkoholen oder Polyesterpolyolen oder Polyetherpolyolen hergestellt werden. Beispiele zu Polycarbonatpolyolen finden sich z. B. in der EP 1359177 A. Beispielsweise können als Polycarbonatdiole die Desmophen® C-Typen der Bayer MaterialScience AG verwendet werden, wie z. B. Desmophen® C 1100 oder Desmophen® C 2200.

Ebenfalls können Polyethercarbonatpolyole als H-funktionelle Startersubstanzen eingesetzt werden. Insbesondere werden Polyethercarbonatpolyole, die nach dem hier beschriebenen Verfahren hergestellt werden eingesetzt. Diese als H-funktionelle Startersubstanzen eingesetzten Polyethercarbonatpolyole werden hierzu in einem separaten Reaktionsschritt zuvor hergestellt.

Die H-funktionellen Startersubstanzen weisen im Allgemeinen eine Funktionalität (d.h. Anzahl an für die Polymerisation aktiven H-Atomen pro Molekül) von 1 bis 6, bevorzugt von 1 bis 4 und besonders bevorzugt von 2 oder 3 auf. Die H-funktionellen Startersubstanzen werden entweder einzeln oder als Gemisch aus mindestens zwei H-funktionellen Startersubstanzen eingesetzt.

Bevorzugte H-funktionelle Startersubstanzen sind Alkohole der allgemeinen Formel (I),

$$HO\text{-}(CH_2)_x\text{-}OH \qquad (I)$$

wobei x eine Zahl von 1 bis 20, bevorzugt eine gerade Zahl von 2 bis 20 ist. Beispiele für Alkohole gemäß Formel (I) sind Ethylenglycol, 1,4-Butandiol, 1,6-Hexandiol, 1,8-Octandiol, 1,10 Decandiol und 1,12-Dodecandiol. Weitere bevorzugte H-funktionelle Startersubstanzen sind Neopentylglykol, Trimethylolpropan, Glycerin, Pentaerythrit, Umsetzungsprodukte der Alkohole gemäß Formel (I) mit ε-Caprolacton, z.B. Umsetzungsprodukte von Trimethylolpropan mit ε-Caprolacton, Umsetzungsprodukte von Glycerin mit ε-Caprolacton, sowie Umsetzungsprodukte von Pentaerythrit mit ε-Caprolacton. Weiterhin bevorzugt werden als H-funktionelle Startsubstanzen Wasser, Diethylenglykol, Dipropylenglykol, Rizinusöl, Sorbit und Polyetherpolyole, aufgebaut aus sich wiederholenden Polyalkylenoxideinheiten, eingesetzt.

Besonders bevorzugt handelt es sich bei den H-funktionellen Startersubstanzen um eine oder mehrere Verbindungen ausgewählt aus der Gruppe bestehend aus Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, Diethylenglykol, Dipropylenglykol, Glycerin, Trimethylolpropan, di- und trifunktionelle Polyetherpolyole, wobei das Polyetherpolyol aus einer di- oder tri-H-funktionellen Startersubstanz und Propylenoxid bzw. einer di- oder tri-H-funktionellen Startersubstanz, Propylenoxid und Ethylenoxid aufgebaut ist. Die Polyetherpolyole haben bevorzugt ein zahlenmittleres Molekulargewicht $M_n$ im Bereich von 62 bis 4500 g/mol und insbesondere ein zahlenmittleres Molekulargewicht $M_n$ im Bereich von 62 bis 3000 g/mol, ganz besonders bevorzugt ein Molekulargewicht von 62 bis 1500 g/mol. Bevorzugt haben die Polyetherpolyole eine Funktionalität von 2 bis 3, besonders bevorzugt von 2.

In einer bevorzugten Ausführungsform der Erfindung ist das Polyethercarbonatpolyol durch Anlagerung von Kohlendioxid und Alkylenoxiden an H-funktionelle Startersubstanzen unter Verwendung von Multimetallcyanid-Katalysatoren (DMC-Katalysatoren) erhältlich. Die Herstellung von Polyethercarbonatpolyolen durch Anlagerung von Alkylen-oxiden und $CO_2$ an H-funktionelle Starter unter Verwendung von DMC-Katalysatoren ist beispielsweise aus der EP 0222453 A, WO 2008/013731 A und EP 2115032 A bekannt.

DMC-Katalysatoren sind im Prinzip aus dem Stand der Technik zur Homopolymerisation von Epoxiden bekannt (siehe z.B. US 3 404 109 A, US 3 829 505 A, US 3 941 849 A und US 5 158 922 A). DMC-Katalysatoren, die z.B. in US 5 470 813 A, EP 700 949 A, EP 743 093 A, EP 761 708 A, WO 97/40086 A, WO 98/16310 A und WO 00/47649 A beschrieben sind, besitzen eine sehr hohe Aktivität in der Homopolymerisation von Epoxiden und ermöglichen die Herstellung von Polyetherpolyolen bei sehr geringen Katalysatorkonzentrationen (25 ppm oder weniger). Ein typisches Beispiel sind die in EP-A 700 949 beschriebenen hochaktiven DMC-Katalysatoren, die neben einer Doppelmetallcyanid-Verbindung (z.B. Zinkhexacyanocobaltat(III)) und einem organischen Komplexliganden (z.B. tert.-Butanol) noch einen Polyether mit einem zahlenmittlerem Molekulargewicht $M_n$ größer als 500 g/mol enthalten.

Der DMC-Katalysator wird zumeist in einer Menge von kleiner 1 Gew.-%, vorzugsweise in einer Menge von kleiner 0,5 Gew.-%, besonders bevorzugt in einer Menge von kleiner 500 ppm und insbesondere in einer Menge von kleiner 300 ppm, jeweils bezogen auf das Gewicht des Polyethercarbonatpolyols eingesetzt.

Als Kettenverlängerungsmittel c) eignen sich solche, deren mittlere Hydroxyl- oder Aminzahl bei 245 bis 1850 und deren Funktionalität bei 1,8 bis 8, bevorzugt bei 1,8 bis 3, liegt. Beispielhaft zu nennen sind hier Ethylenglykol, Propylenglykol, Diethylenglykol, Dipropylenglykol, 1,4-Butandiol, 1,6-Hexandiol, Triethanolamin, Glycerin, Trimethylolpropan und kurzkettige Alkoxylierungsprodukte. Die Komponente c) wird vorzugsweise in Mengen von 0 bis 26 Gew.-%, bezogen auf die Reaktionskomponenten b) bis g), verwendet. Ethylenglykol, 1,4-Butandiol, das Propoxylierungsprodukt von Trimethylolpropan (OHZ: 550) sowie Gemische aus Triethanolamin und Diisopropanolamin (OHZ: 1160) werden besonders bevorzugt eingesetzt.

Als Treibmittel d) sind sowohl physikalische Treibmittel als auch Wasser einsetzbar. Bevorzugte physikalische Treibmittel d) sind 1,1-Difluorethan (HFC-152a), 1,1,1,2-Tetrafluorethan (HFC-134a), 1,1,1,2,3,3,3,-Heptafluorpropan (HFC-227ea), 1,1,1,3,3-Pentafluorpropan (HFC-245fa), 1,1,1,3,3-Pentafluorbutan (HFC-365mfc), n-Pentan, i-Pentan, i-Hexan oder Gemische daraus. Besonders bevorzugt wird Wasser als Komponente d) eingesetzt. Die Treibmittel können alleine oder in Kombination eingesetzt werden und liegen in Mengen von 0,05 bis 5 Gew.-%, besonders bevorzugt in Mengen von 0,3 bis 3,5 Gew.-%, bezogen auf die Reaktionskomponenten b) bis g), vor.

Die an sich langsam ablaufende Reaktion zwischen Isocyanat- und Hydroxylgruppen kann durch Zusatz von einem oder mehreren Katalysatoren e) beschleunigt werden. Dabei kommen insbesondere tertiäre Amine der an sich bekannten Art in Frage, z.B. Triethylamin, Tributylamin, N-Methylmorpholin, N-Ethylmorpholin, N-Cocomorpholin, N,N,N',N'-Tetramethylethylendiamin, 1,4-Diazabicyclo[2.2.2]octan, N-Methyl-N'-dimethylaminoethylpiperazin, N,N-Dimethylcyclohexylamin, N,N,N',N'-Tetramethyl-1,3-butandiamin, N,N-Dimethylimidazol-ß-phenylethylamin, 1,2-Dimethylimidazol, Bis(2-dimethylaminoethyl)-ether oder 2-Methylimidazol. Auch organische Metallkatalysatoren, wie organische Wismutkatalysatoren, z.B. Wismut-(III)-neodecanoat oder organische Zinnkatalysatoren, z.B. Zinn-(II)-salze von Carbonsäuren, wie Zinn-(II)-acetat, Zinn-(II)-octoat, Zinn-(II)-ethylhexoat und Zinn-(II)-laurat und die Dialkylzinnsalze von Carbonsäuren, z.B. Dibutylzinndiacetat, Dibutylzinndilaurat, Dibutylzinnmaleat oder Dioctylzinndiacetat können allein oder in Kombination mit den tertiären Aminen verwendet werden. Bevorzugt werden Katalysatoren verwendet, welche primäre und/oder sekundäre Hydroxyl- und/oder Aminogruppen besitzen. Dabei kommen sowohl einbaubare Amine als auch einbaubare organische Metallkatalysatoren der an sich bekannten Art in Frage, z.B. N-(3-Dimethylaminopropyl)-N,N-diisopropanolamin, N,N,N' -Trimethyl-N' -hydroxyethyl-bisaminoethylether, Tetramethyldipropylentriamin, 3-(Dimethylamino)propylharnstoff, Zinnricinoleat. Die Katalysatoren können allein oder in Kombination verwendet werden.

Vorzugsweise werden > 0 bis 5 Gew.-% (mehr bevorzugt 0,5 bis 4,5 Gew.-%), bezogen auf die Reaktionskomponenten b) bis g), eines oder mehrerer Katalysatoren mit primären und/oder sekundären Hydroxyl- und/oder Aminogruppen eingesetzt.

Weitere Vertreter von Katalysatoren sowie Einzelheiten über die Wirkungsweise der Katalysatoren sind im Kunststoff-Handbuch, Band VII "Polyurethane", 3. Auflage, Carl Hanser Verlag, München / Wien, 1993 auf den Seiten 104 - 110 beschrieben.

Gegebenenfalls mitzuverwendende Füllstoffe f) können sowohl anorganische als auch organische Füllstoffe sein. Als anorganische Füllstoffe seien beispielhaft genannt: silikatische Mineralien, wie Schichtsilikate, Metalloxide wie Eisenoxide, pyrogen hergestellte Metalloxide wie Aerosile, Metallsalze wie Schwerspat, anorganische Pigmente wie Cadmiumsulfid, Zinksulfid sowie Glas, Mikroglaskugeln, Mikroglashohlkugeln, u.a. Verwendet werden können natürliche und synthetische faserförmige Mineralien, wie Wollastonit und Glasfasern verschiedener Länge, die gegebenenfalls geschlichtet sein können. Als organische Füllstoffe seien beispielhaft genannt: kristalline Paraffine oder Fette, Pulver auf Basis von Polystyrol, Polyvinylchlorid, Harnstoff-Formaldehyd-Massen und/oder Polyhydrazodicarbonamiden (z.B. aus Hydrazin und Toluylendiisocyanat). Es können auch Mikrohohlkugeln organischer Herkunft oder Kork eingesetzt werden. Die organischen bzw. anorganischen Füllstoffe können einzeln oder als Gemische verwendet werden. Die Füllstoffe f) werden bevorzugt in Mengen von 0 bis zu 50 Gew.-%, vorzugsweise von 0 bis zu 30 Gew.-%, bezogen auf die Reaktionskomponenten b) bis g), zugegeben.

Zu den Hilfs- und Zusatzstoffen g), die gegebenenfalls mitverwendet werden, gehören beispielsweise Stabilisatoren, färbende Agenzien, Flammschutzmittel, Weichmacher und/oder einwertige Alkohole.

Als Stabilisatoren werden insbesondere oberflächenaktive Substanzen, d.h. Verbindungen eingesetzt, welche zur Unterstützung der Homogenisierung der Ausgangsstoffe dienen und gegebenenfalls auch geeignet sind, die Zellstruktur der Kunststoffe zu regulieren. Genannt seien beispielsweise Emulgatoren, wie die Natriumsalze der Rizinusölsulfate oder Fettsäuren sowie Salze von Fettsäuren mit Aminen, Schaumstabilisatoren, wie Siloxanoxalkylengemischpolymerisate, und Zellregulatoren, wie Paraffine. Als Stabilisatoren kommen vorwiegend Organopolysiloxane zur Anwendung, welche wasserlöslich sind. Dabei handelt es sich um Polydimethylsiloxanreste, an denen eine Polyetherkette aus Ethylenoxid und Propylenoxid angepfropft ist. Die oberflächenaktiven Substanzen werden vorzugsweise in Mengen von 0,01 bis 5,0 Gew.-%, bevorzugt von 0,1 bis 1,5 Gew.-%, bezogen auf die Reaktionskomponenten b) bis g), zugegeben.

Als färbende Agenzien können für die Einfärbung von Polyurethanen an sich bekannte Farbstoffe und/oder Farbpigmente auf organischer und/oder anorganischer Basis, beispielsweise Eisenoxid- und/oder Chromoxidpigmente und Pigmente auf Phthalocyanin- und/oder Monoazo-Basis eingesetzt werden.

Geeignete, gegebenenfalls mitzuverwendende Flammschutzmittel sind beispielsweise Trikresylphosphat, Tris-2-chlorethylphosphat, Tris-chlorpropylphosphat und Tris-2,3-dibrompro-pylphosphat. Außer den bereits genannten halogensubstituierten Phosphaten können auch anorganische Flammschutzmittel, wie Aluminiumoxidhydrat, Ammoniumpolyphosphat, Calciumsulfat, Natriumpolymetaphosphat oder Aminphosphate, z.B. Melaminphosphate, verwendet werden.

Als Weichmacher seien beispielsweise Ester von mehrwertigen, vorzugsweise zweiwertigen Carbonsäuren mit einwertigen Alkoholen genannt. Die Säurekomponente solcher Ester kann sich z.B. herleiten von Bernsteinsäure, Isophthalsäure, Trimellitsäure, Phthalsäureanhydrid, Tetra- und/oder Hexahydrophthalsäureanhydrid, Endomethylentetrahydrophthalsäureanhydrid, Glutarsäureanhydrid, Maleinsäureanhydrid, Fumarsäure und/oder dimeren und/oder trimeren Fettsäuren, gegebenenfalls in Mischung mit monomeren Fettsäuren. Die Alkoholkomponente solcher Ester kann sich z.B. herleiten von verzweigten und/oder unverzweigten aliphatischen Alkoholen mit 1 bis 20 C-Atomen, wie Methanol, Ethanol, Propanol, Isopropanol, n- Butanol, sek.-Butanol, tert.-Butanol, den verschiedenen Isomeren des Pentylalkohols, Hexylalkohols, Octylalkohols (z.B. 2-Ethyl-Hexanol), Nonylalkohols, Decylalkohols, Laurylalkohols, Myristylalkohols, Cetylalkohols, Stearylalkohols und/oder von natürlich vorkommenden oder durch Hydrierung natürlich vorkommender Carbonsäuren erhältlichen Fett- und Wachsalkoholen. Als Alkoholkomponente kommen auch cycloaliphatische und/oder aromatische Hydroxyverbindungen infrage, beispielsweise Cyclohexanol und dessen Homologe Phenol, Kresol, Thymol, Carvacrol, Benzylalkohol und/oder Phenylethanol. Als Weichmacher kommen außerdem Ester der obengenannten Alkohole mit Phosphorsäure in Frage. Gegebenenfalls können auch Phosphorsäureester aus halogenierten Alkoholen, wie z.B. Trichlorethylphosphat, eingesetzt werden. Im letzteren Fall kann gleichzeitig mit dem Weichmacher-Effekt ein flammhemmender Effekt erzielt werden. Selbstverständlich können auch gemischte Ester der obengenannten Alkohole und Carbonsäuren eingesetzt werden. Bei den Weichmachern kann es sich auch um sogenannte polymere Weichmacher handeln, z.B. um Polyester der Adipin-, Sebacin- und/oder Phthalsäure. Weiter sind auch Alkylsulfonsäureester des Phenols, z.B. Paraffinsulfonsäurephenylester, als Weichmacher verwendbar.

Weitere, gegebenenfalls mitzuverwendende Hilfs- und/oder Zusatzstoffe g) sind einwertige Alkohole wie Butanol, 2-Ethylhexanol, Octanol, Dodecanol oder Cyclohexanol, die gegebenenfalls zwecks Herbeiführung eines gewünschten Kettenabbruchs mit verwendet werden können.

Die Hilfs- und/oder Zusatzstoffe g) werden vorzugsweise in Mengen von 0 bis 25 Gew.-%, besonders bevorzugt von 0 bis 10 Gew.-%, bezogen auf die Reaktionskomponenten b) bis g), zugegeben. Nähere Angaben über die üblichen Hilfs- und Zusatzstoffe g) sind der Fachliteratur, beispielsweise dem Kunststoff-Handbuch, Band VII "Polyurethane", 3. Auflage, Carl Hanser Verlag, München / Wien, 1993, Seite 104 ff. zu entnehmen.

Die Herstellung der Polyurethanschaumstoffe kann prinzipiell auf verschiedene Weise erfolgen. Man kann beispielsweise nach dem one-shot- oder dem Prepolymer-Verfahren arbeiten. Beim one-shot - Verfahren werden alle Komponenten, z.B. Polyole, Polyisocyanate, Kettenverlängerer, Treibmittel, Katalysatoren, Füll- und/oder Zusatzstoffe zusammengegeben und intensiv miteinander vermischt. Beim Prepolymer-Verfahren stellt man zunächst ein NCO-Prepolymer her, indem man einen Teil der Polyolmenge mit der gesamten Polyisocyanatmenge umsetzt, fügt dann dem erhaltenen NCO-Prepolymer die restliche Menge an Polyol sowie gegebenenfalls Kettenverlängerer, Treibmittel, Katalysator, Füll- und/oder Zusatzstoffe zu und mischt intensiv. Besonders bevorzugt im Sinne der vorliegenden Erfindung ist ein Verfahren, bei dem die Komponenten b) bis g) zu einer so genannten "Polyolkomponente" abgemischt werden, die dann mit dem Polyisocyanat und/oder NCO-Prepolymer a) verarbeitet wird. Die gegebenenfalls mit zu verwendenden Kettenverlängerer, Treibmittel, Katalysatoren, Füllstoffe sowie Hilfs- und/oder Zusatzstoffe werden wie oben beschrieben im Allgemeinen der "Polyolkomponente" zugesetzt, jedoch ist dies nicht zwingend erforderlich, da mit der Polyisocyanatkomponente a) verträgliche, nicht mit ihr reagierende Komponenten auch dieser einverleibt werden können.

Das bei der Durchmischung der Reaktionskomponenten entstehende Gemisch wird beispielsweise nach dem Gießverfahren auf die Schottersteine aufgebracht. Hierbei erfolgt die Förderung, Dosierung und Mischung der Einzelkomponenten oder der Komponentengemische mit den in der Polyurethan-Chemie an sich bekannten Vorrichtungen. Die Menge des eingetragenen Gemisches wird im Allgemeinen so bemessen, dass der Polyurethanschaum eine Freischaumdichte von 20 bis 800 kg/m$^3$, bevorzugt 30 bis 600 kg/m$^3$, besonders bevorzugt von 50 bis 300 kg/m$^3$, aufweist. Als Ausgangstemperatur des auf die Schottersteine aufgebrachten Reaktionsgemisches wird im Allgemeinen ein Bereich von 20 bis 80°C, vorzugsweise 25 bis 40°C, gewählt. Die Schottersteine werden gegebenenfalls vor dem Einbringen des Reaktionsgemisches getrocknet und erwärmt. In Abhängigkeit von den Reaktionskomponenten, den zugegebenen Katalysatoren und der Temperaturführung kann die Zeit bis zur Verfestigung des Schaums (Abbindezeit) von 15 bis 45 Sekunden, bevorzugt von 15 bis 30 Sekunden, betragen. Längere Verfestigungszeiten sind möglich, aber unwirtschaftlich.

Hinsichtlich der Größe der Schotterpartikel ist es bevorzugt, dass die Schottersteine eine Körnung von 32 bis 63 mm aufweisen.

Die vorliegende Erfindung wird anhand der nachfolgenden Beispiele näher erläutert werden, ohne jedoch darauf beschränkt zu sein.

**Beispiele**

**OH-Zahl:**

Die Bestimmung der OH-Zahlen erfolgte gemäß der Vorschrift der DIN 53240.

**$CO_2$-Gehalt im Polyethercarbonatpolyol:**

Der Anteil an eingebautem $CO_2$, im resultierenden Polyethercarbonatpolyol sowie das Verhältnis von Propylencarbonat zu Polyethercarbonatpolyol wurden mittels $^1$H-NMR (Firma Bruker, DPX 400, 400 MHz; Pulsprogramm zg30, Wartezeit d1: 10s, 64 Scans) bestimmt. Die Probe wurde jeweils in deuteriertem Chloroform gelöst. Die relevanten Resonanzen im $^1$H-NMR (bezogen auf TMS = 0 ppm) sind wie folgt:
Cyclisches Carbonat (welches als Nebenprodukt gebildet wurde) mit Resonanz bei 4,5 ppm, Carbonat, resultierend aus im Polyethercarbonatpolyol eingebautem Kohlendioxid mit Resonanzen bei 5,1 bis 4,8 ppm, nicht abreagiertes PO mit Resonanz bei 2,4 ppm, Polyetherpolyol (d.h. ohne eingebautes Kohlendioxid) mit Resonanzen bei 1,2 bis 1,0 ppm, das als Startermolekül (soweit vorhanden) eingebaute 1,8 Octandiol mit einer Resonanz bei 1,6 bis 1,52 ppm.

Der Molenanteil des im Polymer eingebauten Carbonats in der Reaktionsmischung wird nach Formel (XII) wie folgt berechnet, wobei folgende Abkürzungen verwendet werden:

F(4,5) = Fläche der Resonanz bei 4,5 ppm für cyclisches Carbonat (entspricht einem H Atom)

F(5,1-4,8) = Fläche der Resonanz bei 5,1-4,8 ppm für Polyethercarbonatpolyol und einem H-Atom für cyclisches Carbonat.

F(2,4) = Fläche der Resonanz bei 2,4 ppm für freies, nicht abreagiertes PO

F(1,2-1,0) = Fläche der Resonanz bei 1,2-1,0 ppm für Polyetherpolyol

F(1,6-1,52) = Fläche der Resonanz bei 1,6 bis 1,52 ppm für 1,8 Octandiol (Starter), soweit vorhanden

Unter Berücksichtigung der relativen Intensitäten wurde gemäß der folgenden Formel (II) für das polymer gebundene Carbonat ("lineares Carbonat" LC) in der Reaktionsmischung in mol% umgerechnet:

$$LC = \frac{F(5,1-4,8) - F(4,5)}{F(5,1-4,8) + F(2,4) + 0,33 * F(1,2-1,0) + 0,25 * F(1,6-1,52)} * 100 \qquad (II)$$

Der Gewichtsanteil (in Gew.-%) polymer-gebundenen Carbonats (LC') in der Reaktionsmischung wurde nach Formel (III) berechnet,

$$LC' = \frac{[F(5,1-4,8) - F(4,5)] * 102}{N} * 100\% \qquad (III)$$

wobei sich der Wert für N ("Nenner" N) nach Formel (IV) berechnet:

$$N = \left[F(5{,}1-4{,}8) - F(4{,}5)\right] * 102 + F(4{,}5) * 102 + F(2{,}4) * 58 + 0{,}33 * F(1{,}2-1{,}0) * 58 + 0{,}25 * F(1{,}6-1{,}52) * 146$$

(IV)

Der Faktor 102 resultiert aus der Summe der Molmassen von $CO_2$ (Molmasse 44 g/mol) und der von Propylenoxid (Molmasse 58 g/mol), der Faktor 58 resultiert aus der Molmasse von Propylenoxid und der Faktor 146 resultiert aus der Molmasse des eingesetzten Starters 1,8-Octandiol (soweit vorhanden).
Die in den Beispielen eingesetzten Komponenten haben die folgende Bedeutung:

Polyol 1: Polyethercarbonatpolyol
Polyol 2: Trifunktionelles Polyethercarbonatpolyol, $M_n$ = 4000 g/mol
Polyol 3: Polyetherpolyol
Polyol 4: Trifunktionelles Polyetherpolyol
Dabco T 120 (UL1): Zinn-basierter Katalysator
NIAX A-1: Bis(2-dimethylaminoethyl)ether-basierter Katalysator
Dabco 25 S: 1,4-Diazabicyclooctan-basierter Katalysator
Kosmos EF: Zinn-basierter Katalysator
Jeffcat ZF -10 : N,N,N'-Trimethyl-N'-hydroxyethylbisaminoethylether-basierter Katalysator
Isocyanat 1 : MDI-basiertes Prepolymer
Isocyanat 2: Difunktionelles MDI-basiertes Prepolymer

Durchführung

Für die Polyolkomponente wurden zunächst Polyole und gegebenenfalls Kettenverlängerer, Katalysator, Stabilisator und Treibmittel homogenisiert. Als Treibmittel diente die in den Polyolen enthaltene Feuchtigkeit (Wasser). Dann wurden Polyisocyanate zugegeben und innerhalb von 10 Sekunden vermischt (PENDRAULIK-Labormischer Type LM34, 3000U/min). Die Startzeit und Abbindezeit wurden ab Rührbeginn bestimmt.
Man erhielt Polyurethan-Schaumstoffe, deren Raumgewicht (gemäß DIN EN ISO 845), Druckverformungsrest (DVR; gemäß DIN EN ISO 1856), Stauchkraft (gemäß DIN EN ISO 3386-1-98), Stauchhärte (gemäß DIN EN ISO 3386-1-98) und Zugfestigkeit (gemäß DIN EN ISO 1798) bestimmt wurden.
In allen Beispielen wurde eine Kennzahl von 100 eingestellt. Mit den Reaktionsgemischen der erfindungsgemäßen Beispiele 1 bis 7 können Schotterkörper auch langfristig hervorragend stabilisiert werden.
Es wurden Polyurethanpolymere gemäß den nachfolgenden Tabellen hergestellt. Sofern nicht anders vermerkt, beziehen sich Mengenangaben in den Tabellen auf Gewichts-%.

| Beispiel Nr. | | 1 | 2 | 3 | 4 |
|---|---|---|---|---|---|
| | OH-Zahl [mg KOH/g] | | | | |
| Polyol 1 | 28,2 | 37,8 | 40,8 | 42,6 | 50 |
| Polyol 2 | 55,8 | 30 | 30 | 33 | 41,5 |
| Polyol 3 | 27,5 | | | | |
| Polyol 4 | 550 | 30 | 27 | 22 | |
| 1,4-Butandiol | 1245 | | | | 4 |
| Monoethylenglykol | 1808 | | | | 2 |
| Triethanolamin+Diisopropanolamin | 1160 | | | | |
| Dabco T 120 (UL1) | | 0,1 | 0,1 | 0,1 | |
| NIAX A-1 | 251 | 0,7 | 0,7 | 0,7 | 0,9 |
| Dabco 25 S | 934 | 1 | 1 | 1,2 | 1,2 |
| Kosmos EF | 188 | | | | |
| Jeffcat ZF -10 | 290 | | | | |
| Wasser | 6222 | 0,4 | 0,4 | 0,4 | 0,4 |
| | | 100 | 100 | 100 | 100 |
| | NCO-Gehalt [%] | | | | |
| Isocyanat 1 | 19,8 | | | | |
| Isocyanat 2 | 24,5 | 69,8 | 65 | 57,9 | 49,4 |
| Formteildichte | [kg/m³] | 200 | 212 | 207 | 226 |
| Startzeit | [s] | 10 | 10 | 10 | 10 |
| Gelzeit | [s] | 25 | 28 | 30 | 160 |
| Freischaumdichte | [kg/m³] | 263,6 | 263,7 | 268,6 | 251,87 |
| Stauchhärte bei 40% Verformung | [kPa] | 1,52 | 0,11 | 250,58 | 123,68 |
| Stauchhärte bei 60% Verformung | [kPa] | 1684,2 | 1491,13 | 1180,64 | 293,96 |
| Druckverformungsrest (40%, 25 °C, 5 min) | [%] | 37,2 | 37,3 | 37,3 | 15,6 |
| Zugfestigkeit | [MPa] | 2,844 | 2,398 | 1,93 | 0,876 |
| Bruchdehnung | [%] | 17 | 19 | 45 | 106 |

| Beispiel Nr. | | 5 | 6 | 7 |
|---|---|---|---|---|
| | OH-Zahl | | | |
| Polyol 1 | 28,2 | 50 | 50 | 69,6 |
| Polyol 2 | 55,8 | 44,7 | 42,6 | |
| Polyol 3 | 27,5 | | | 23 |
| Polyol 4 | 550 | | | |
| 1,4-Butandiol | 1245 | | | 5 |
| Monoethylenglykol | 1808 | 4 | 4 | |
| Triethanolamin+Diisopropanolamin | 1160 | | | |
| Dabco T 120 (UL1) | | | | 0,3 |
| NIAX A-1 | 251 | | | 0,3 |
| Dabco 25 S | 934 | | | 1,4 |
| Kosmos EF | 188 | 0,9 | | |
| Jeffcat ZF -10 | 290 | | 3 | |
| Wasser | 6222 | 0,4 | 0,4 | 0,4 |
| | | 100 | 100 | 100 |
| | NCO-Gehalt [%] | | | |
| Isocyanat 1 | 19,8 | | | 48 |
| Isocyanat 2 I8IF19 | 24,5 | 42,2 | 44 | |
| Formteildichte | [kg/m³] | 206 | 227 | 220 |
| Startzeit | [s] | 10 | 10 | 10 |
| Gelzeit | [s] | 32 | 120 | 45 |
| Freischaumdichte | [kg/m³] | 306,31 | 236,45 | 250,6 |
| Stauchhärte bei 40% Verformung | [kPa] | 100,08 | 43,93 | 76,96 |
| Stauchhärte bei 60% Verformung | [kPa] | 333,73 | 121,54 | 199,32 |
| Druckverformungsrest (40%, 25 °C, 5 min) | [%] | 30,2 | 34,6 | 8,3 |
| Zugfestigkeit | [MPa] | 0,727 | 0,421 | 0,58 |
| Bruchdehnung | [%] | 181 | 100 | 259 |

**Patentansprüche**

1. Verfahren zur Herstellung von Schotterkörpern, wobei

1) Schottersteine zu einem Schotterkörper aufgeschüttet werden und
2) zwischen die aufgeschütteten Schottersteine ein Reaktionsgemisch zur Herstellung eines Polyurethanschaumstoffes appliziert wird, wobei das Reaktionsgemisch umfasst:

a) eine oder mehrere Isocyanatverbindungen
b) eine Polyolkomponente umfassend ein oder mehrere Polyethercarbonatpolyole
c) 0 bis 26 Gew.-%, bezogen auf die Reaktionskomponenten b) bis g), eines oder mehrerer Kettenverlängerungsmittel mit einer Hydroxyl- oder Aminzahl von 245 bis 1850 und einer Funktionalität von 1,8 bis 8,

d) 0,05 bis 5 Gew.-%, bezogen auf die Reaktionskomponenten b) bis g), eines oder mehrerer Treibmittel,
e) 0 bis 5 Gew.-%, bezogen auf die Reaktionskomponenten b) bis g), eines oder mehrerer Katalysatoren,
f) 0 bis 50 Gew.-%, bezogen auf die Reaktionskomponenten b) bis g), eines oder mehrerer Füllstoffe und
g) 0 bis 25 Gew.-%, bezogen auf die Reaktionskomponenten b) bis g), eines oder mehrerer Hilfs- und/oder Zusatzstoffe,

wobei die Kennzahl des Reaktionsgemisches im Bereich von 70 und 130 liegt.

2. Verfahren zur Herstellung von Schotterkörpern gemäß Anspruch 1, wobei die Schotterkörper im Gleisbau, Straßenbau und/oder Deichbau eingesetzt werden.

3. Verfahren zur Herstellung von Schotterkörpern gemäß Anspruch 1 oder 2, wobei > 0 bis 5 Gew.-%, bezogen auf die Reaktionskomponenten b) bis g), eines oder mehrerer Katalysatoren mit primären und/oder sekundären Hydroxyl- und/oder Aminogruppen eingesetzt werden.

4. Verfahren zur Herstellung von Schotterkörpern gemäß einem oder mehreren der Ansprüche 1 bis 3, wobei die Schottersteine eine Körnung von 32 bis 63 mm aufweisen.

5. Verfahren zur Herstellung von Schotterkörpern gemäß einem oder mehreren der Ansprüche 1 bis 4, wobei die Isocyanatverbindungen ausgewählt sind aus der Gruppe:

Polyisocyanate mit einem NCO-Gehalt von 28 bis 50 Gew.-% und
NCO-Prepolymere mit einem NCO-Gehalt von 10 bis 48 Gew.-% aus Polyisocyanaten mit einem NCO-Gehalt von 28 bis 50 Gew.-% und Polyetherpolyolen mit einer Hydroxylzahl von 6 bis 112, Polyoxyalkylendiolen mit einer Hydroxylzahl von 113 bis 1100 oder Alkylendiolen mit einer Hydroxylzahl von 645 bis 1850 mg KOH/g oder Gemischen daraus.

6. Verfahren zur Herstellung von Schotterkörpern gemäß einem oder mehreren der Ansprüche 1 bis 5, wobei das Polyethercarbonatpolyol einen Gehalt an Carbonatgruppen, berechnet als $CO_2$, von $\geq 3$ und $\leq 35$ Gew.-% aufweist.

7. Verfahren zur Herstellung von Schotterkörpern gemäß einem oder mehreren der Ansprüche 1 bis 6, wobei das Polyethercarbonatpolyol ein zahlenmittleres Molekulargewicht $M_n$ von $\geq 500$ und $\leq 10000$ g/mol aufweist.

8. Schotterkörper, umfassend Schottersteine und zwischen den Schottersteinen befindlichen Polyurethan-Schaumstoff, wobei der Polyurethanschaumstoff erhältlich ist aus einem Reaktionsgemisch umfassend:

a) eine oder mehrere Isocyanatverbindungen
b) eine Polyolkomponente umfassend ein oder mehrere Polyethercarbonatpolyole
c) 0 bis 26 Gew.-%, bezogen auf die Reaktionskomponenten b) bis g), eines oder mehrerer Kettenverlängerungsmittel mit einer Hydroxyl- oder Aminzahl von 245 bis 1850 und einer Funktionalität von 1,8 bis 8,
d) 0,05 bis 5 Gew.-%, bezogen auf die Reaktionskomponenten b) bis g), eines oder mehrerer Treibmittel,
e) 0 bis 5 Gew.-%, bezogen auf die Reaktionskomponenten b) bis g), eines oder mehrerer Katalysatoren,
f) 0 bis 50 Gew.-%, bezogen auf die Reaktionskomponenten b) bis g), eines oder mehrerer Füllstoffe und
g) 0 bis 25 Gew.-%, bezogen auf die Reaktionskomponenten b) bis g), eines oder mehrerer Hilfs- und/oder Zusatzstoffe,

wobei die Kennzahl des Reaktionsgemisches im Bereich von 70 und 130 liegt.

9. Schotterkörper gemäß Anspruch 8, wobei der Polyurethanschaumstoff eine Freischaumdichte von 20 bis 800 kg/m$^3$ (gemessen gemäß DIN EN ISO 845) und eine Zugfestigkeit von mindestens 0,1 MPa (gemessen gemäß DIN EN ISO 1798) aufweist.

10. Schotterkörper gemäß Anspruch 8 oder 9, wobei die Schottersteine eine Körnung von 32 bis 63 mm aufweisen.

11. Schotterkörper gemäß einem oder mehreren der Ansprüche 8 bis 10, wobei die Isocyanatverbindungen ausgewählt sind aus der Gruppe:

Polyisocyanate mit einem NCO-Gehalt von 28 bis 50 Gew.-% und

NCO-Prepolymere mit einem NCO-Gehalt von 10 bis 48 Gew.-% aus Polyisocyanaten mit einem NCO-Gehalt von 28 bis 50 Gew.-% und Polyetherpolyolen mit einer Hydroxylzahl von 6 bis 112, Polyoxyalkylendiolen mit einer Hydroxylzahl von 113 bis 1100 oder Alkylendiolen mit einer Hydroxylzahl von 645 bis 1850 mg KOH/g oder Gemischen daraus.

12. Schotterkörper gemäß einem oder mehreren der Ansprüche 8 bis 11, wobei das Polyethercarbonatpolyol einen Gehalt an Carbonatgruppen, berechnet als $CO_2$, von $\geq$ 3 und $\leq$ 35 Gew.-% aufweist.

13. Schotterkörper gemäß einem oder mehreren der Ansprüche 8 bis 12, wobei das Polyethercarbonatpolyol ein zahlenmittleres Molekulargewicht $M_n$ von $\geq$ 500 und $\leq$ 10000 g/mol aufweist.

14. Verwendung der Schotterkörper gemäß einem oder mehreren der Ansprüche 8 bis 13 für den Gleisbau, Straßenbau und/oder Deichbau.

**Claims**

1. Method for the production of ballast layers, wherein

   1) ballast stones are heaped up to form a ballast layer, and
   2) a reaction mixture is applied between the heaped ballast stones in order to produce a polyurethane foam, wherein the reaction mixture comprises:

      a) one or more isocyanate compounds,
      b) a polyol component, comprising one or more polyether carbonate polyols,
      c) 0 to 26 % by weight, related to the reaction components b) to g), of one or more chain prolongation means with a hydroxyl number or amine number of from 245 to 1850 and a functionality of from 1.8 to 8,
      d) 0.05 to 5 % by weight, related to the reaction components b) to g), of one or more blowing agents,
      e) 0 to 5 % by weight, related to the reaction components b) to g), of one or more catalysts,
      f) 0 to 50 % by weight, related to the reaction components b) to g), of one or more filling agents, and
      g) 0 to 25 % by weight, related to the reaction components b) to g), of one or more auxiliary agents and/or additives,

   wherein the characteristic value of the reaction mixture lies in the range of from 70 to 130.

2. Method for the production of ballast layers in accordance with claim 1, wherein the ballast layers are used in railway track construction, road building, and/or dyke construction.

3. Method for the production of ballast layers in accordance with claim 1 or 2, wherein > 0 to 5 % by weight, related to the reaction components b) to g), of one or more catalysts with primary and/or secondary hydroxyl groups and/or amino groups are used.

4. Method for the production of ballast layers in accordance with one or more of claims 1 to 3, wherein the ballast stones exhibit a grain size of from 32 to 63 mm.

5. Method for the production of ballast layers in accordance with one or more of claims 1 to 4, wherein the isocyanate compounds are selected from the group:

   polyisocyanates with an NCO content of from 28 to 50 % by weight, and
   NCO prepolymers with an NCO content of from 10 to 48 % by weight from polyisocyanates with an NCO content of from 28 to 50 % by weight and polyether polyols with a hydroxyl number of from 6 to 112, polyoxy alkylene diols with a hydroxyl number of from 113 to 1100, or alkylene diols with a hydroxyl number of from 645 to 1850 mg KOH/g,

   or mixtures thereof.

6. Method for the production of ballast layers in accordance with one or more of claims 1 to 5, wherein the polyether carbonate polyol comprises a content of carbonate groups, calculated as $CO_2$, of $\geq$ 3 and $\leq$ 35 % by weight.

**7.** Method for the production of ballast layers in accordance with one or more of claims 1 to 6, wherein the polyether carbonate polyol exhibits a number average of the molecular weight $M_n$ of $\geq 500$ and $\leq 10000$ g/mol.

**8.** Ballast layers, comprising ballast stones and polyurethane foam between the ballast layers, wherein the polyurethane foam can be obtained from a reaction mixture comprising:

a) one or more isocyanate compounds,
b) a polyol component, comprising one or more polyether carbonate polyols,
c) 0 to 26 % by weight, related to the reaction components b) to g), of one or more chain prolongation means with a hydroxyl number or amine number of from 245 to 1850 and a functionality of from 1.8 to 8,
d) 0.05 to 5 % by weight, related to the reaction components b) to g), of one or more blowing agents,
e) 0 to 5 % by weight, related to the reaction components b) to g), of one or more catalysts,
f) 0 to 50 % by weight, related to the reaction components b) to g), of one or more filling agents, and
g) 0 to 25 % by weight, related to the reaction components b) to g), of one or more auxiliary agents and/or additives,

wherein the characteristic value of the reaction mixture lies in the range of from 70 to 130.

**9.** Ballast layers according to claim 8, wherein the polyurethane foam exhibits a free foam density of from 20 to 800 kg/m$^3$ (measured in accordance with DIN EN ISO 845) and a tensile strength of at least 0.1 MPa (measured in accordance with DIN EN ISO 1798).

**10.** Ballast layers according to claim 8 or 9, wherein the ballast stones exhibit a grain size of from 32 to 63 mm.

**11.** Ballast layers in accordance with one or more of claims 8 to 10, wherein the isocyanate compounds are selected from the group:

polyisocyanates with an NCO content of from 28 to 50 % by weight, and
NCO prepolymers with an NCO content of from 10 to 48 % by weight from polyisocyanates with an NCO content of from 28 to 50 % by weight and polyether polyols with a hydroxyl number of from 6 to 112, polyoxy alkylene diols with a hydroxyl number of from 113 to 1100, or alkylene diols with a hydroxyl number of from 645 to 1850 mg KOH/g,

or mixtures thereof.

**12.** Ballast layers in accordance with one or more of claims 8 to 11, wherein the polyether carbonate polyol comprises a content of carbonate groups, calculated as $CO_2$, of $\geq 3$ and $\leq 35$ % by weight.

**13.** Ballast layers in accordance with one or more of claims 8 to 12, wherein the polyether carbonate polyol exhibits a number average of the molecular weight $M_n$ of $\geq 500$ and $\leq 10000$ g/mol.

**14.** Use of the ballast layers in accordance with one or more of claims 8 to 13 for railway track construction, road building, and/or dyke construction.

**Revendications**

**1.** Procédé servant à fabriquer des corps de ballast, dans lequel

1) des graviers sont remblayés en un corps de ballast, et
2) un mélange réactionnel servant à fabriquer une mousse de polyuréthane est appliqué entre les graviers remblayés, dans lequel le mélange réactionnel comprend :

a) un ou plusieurs composés isocyanates,
b) un composant de polyol comprenant un ou plusieurs polyols de polyéthercarbonate,
c) 0 à 26 % en poids, par rapport aux composants réactionnels b) à g), d'un ou de plusieurs agents d'allongement de chaîne avec un indice d'hydroxyle ou amine de 245 à 1 850 et une fonctionnalité de 1,8 à 8,
d) 0,05 à 5 % en poids, par rapport aux composants réactionnels b) à g), d'un ou de plusieurs agents porogènes,

e) 0 à 5 % en poids, par rapport aux composants réactionnels b) à g), d'un ou de plusieurs catalyseurs,

f) 0 à 50 % en poids, par rapport aux composants réactionnels b) à g), d'une ou de plusieurs matières de charge, et

g) 0 à 25 % en poids, par rapport aux composants réactionnels b) à g), d'un ou de plusieurs adjuvants et/ou additifs,

dans lequel l'indicateur du mélange réactionnel se situe dans la plage de 70 à 130.

2. Procédé servant à fabriquer des corps de ballast selon la revendication 1, dans lequel les corps de ballast sont utilisés lors de la construction de voies ferrées, de routes et/ou de digues.

3. Procédé servant à fabriquer des corps de ballast selon la revendication 1 ou 2, dans lequel > 0 à 5 % en poids, par rapport aux composants réactionnels b) à g), d'un ou de plusieurs catalyseurs avec des groupes hydroxyle et/ou amino primaires et/ou secondaires sont utilisés.

4. Procédé servant à fabriquer des corps de ballast selon l'une quelconque ou plusieurs des revendications 1 à 3, dans lequel les graviers présentent une granulométrie de 32 à 63 mm.

5. Procédé servant à fabriquer des corps de ballast selon l'une quelconque ou plusieurs des revendications 1 à 4, dans lequel les composés isocyanates sont choisis parmi le groupe :

des polyisocyanates avec une teneur en NCO de 28 à 50 % en poids, et

des prépolymères de NCO avec une teneur en NCO de 10 à 48 % en poids à partir des composés de polyisocyanates avec une teneur en NCO de 28 à 50 % en poids et des polyétherpolyols avec un indice d'hydroxyle de 6 à 112, des polyoxyalkylènediols avec un indice d'hydroxyle de 113 à 1 100 ou des alkylènediols avec un indice d'hydroxyle de 645 à 1 850 mg KOH/g,

ou des mélanges de ces derniers.

6. Procédé servant à fabriquer des corps de ballast selon l'une quelconque ou plusieurs des revendications 1 à 5, dans lequel le polyol de polyéthercarbonate présente une teneur en groupes carbonate, calculée en tant que $CO_2$, de $\geq 3$ et $\leq 35$ % en poids.

7. Procédé servant à fabriquer des corps de ballast selon l'une quelconque ou plusieurs des revendications 1 à 6, dans lequel le polyol de polyéthercarbonate présente un poids moléculaire moyen en nombre $M_n$ de $\geq 500$ et $\leq 10$ 000 g/mol.

8. Corps de ballast comprenant des graviers et une mousse de polyuréthane se trouvant entre les graviers, dans lequel la mousse de polyuréthane peut être obtenue à partir d'un mélange réactionnel comprenant :

a) un ou plusieurs composés isocyanates,

b) un composant polyol comprenant un ou plusieurs polyols de polyéthercarbonate,

c) 0 à 26 % en poids, par rapport aux composants réactionnels b) à g), d'un ou de plusieurs agents d'allongement de chaîne avec un indice d'hydroxyle ou d'amine de 245 à 1 850 et une fonctionnalité de 1,8 à 8,

d) 0,05 à 5 % en poids, par rapport aux composants réactionnels b) à g), d'un ou de plusieurs agents porogènes,

e) 0 à 5 % en poids, par rapport aux composants réactionnels b) à g), d'un ou de plusieurs catalyseurs,

f) 0 à 50 % en poids, par rapport aux composants réactionnels b) à g), d'une ou de plusieurs matières de charge, et

g) 0 à 25 % en poids, par rapport aux composants réactionnels b) à g), d'un ou de plusieurs adjuvants et/ou additifs,

dans lequel l'indicateur du mélange réactionnel se situe dans la plage de 70 à 130.

9. Corps de ballast selon la revendication 8, dans lequel la mousse de polyuréthane présente une densité de mousse de 20 à 800 kg/m³ (mesurée selon la norme DIN EN ISO 845) et une résistance à la traction d'au moins 0,1 MPa (mesurée selon la norme DIN EN ISO 1798).

10. Corps de ballast selon la revendication 8 ou 9, dans lequel les graviers présentent une granulométrie de 32 à 63 mm.

11. Corps de ballast selon l'une quelconque ou plusieurs des revendications 8 à 10, dans lequel les composés isocyanates sont choisis parmi le groupe :

des polyisocyanates avec une teneur en NCO de 28 à 50 % en poids, et
des prépolymères de NCO avec une teneur en NCO de 10 à 48 % en poids à partir des composés de polyisocyanates avec une teneur en NCO de 28 à 50 % en poids et des polyétherpolyols avec un indice d'hydroxyle de 6 à 112, des polyoxyalkylènediols avec un indice d'hydroxyle de 113 à 1 100 ou des alkylènediols avec un indice d'hydroxyle de 645 à 1 850 mg KOH/g,
ou des mélanges de ces derniers.

12. Corps de ballast selon l'une quelconque ou plusieurs des revendications 8 à 11, dans lequel le polyol de polyéthercarbonate présente une teneur en groupes carbonate, calculée en tant que $CO_2$, de $\geq 3$ et $\leq 35$ % en poids.

13. Corps de ballast selon l'une quelconque ou plusieurs des revendications 8 à 12, dans lequel le polyol de polyéthercarbonate présente un poids moléculaire moyen en nombre $M_n$ de $\geq 500$ et $\leq 10\ 000$ g/mol.

14. Utilisation des corps de ballast selon l'une quelconque ou plusieurs des revendications 8 à 13 pour la construction de voies ferrées, de routes et/ou de digues.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DD 86201
- DE 2063727 A
- DE 2305536 A
- DE 3941142 A
- DE 19711437 A
- DE 19651755 A
- DE 3821963 A
- DE 19811838 A
- JP 08157552 A
- JP 8157552 A
- WO 2012080406 A1
- US 2007172590 A1
- EP 1979542 A1
- EP 1359177 A

- EP 0222453 A
- WO 2008013731 A
- EP 2115032 A
- US 3404109 A
- US 3829505 A
- US 3941849 A
- US 5158922 A
- US 5470813 A
- EP 700949 A
- EP 743093 A
- EP 761708 A
- WO 9740086 A
- WO 9816310 A
- WO 0047649 A

**In der Beschreibung aufgeführte Nicht-Patentliteratur**

- Polyurethane. Kunststoff-Handbuch. Carl Hanser Verlag, 1993, vol. VII, 104-110

- Polyurethane. Kunststoff-Handbuch. Carl Hanser Verlag, 1993, vol. VII, 104 ff